# EUROPÄISCHE PATENTANMELDUNG

(11) **EP 1 394 500 A1**
(43) Veröffentlichungstag der Anmeldung: **03.03.2004**
(21) Anmeldenummer: 03017915.4
(22) Anmeldetag: 06.08.2003
(51) Int. Cl.: G01B 9/021, G08B 13/181, G01V 3/12

(54) **Objekterfassung**

(30) Priorität: 28.08.2002 DE 10239468
(71) Anmelder: Sick AG, 79183 Waldkirch, Breisgau (DE)
(72) Erfinder: Goernemann, Otto, 41564 Kaarst (DE)
(74) Vertreter: Ludewigt, Christoph

(57) **Zusammenfassung**

Ein Verfahren zur berührungslosen Erfassung von Objekten 6 in einem Überwachungsbereich verwendet kohärentes Licht. Dabei wird das vom Objekt 6 reflektierte Licht unter Verwendung eines Interferenzmusters ausgewertet.

## Beschreibung

Die Erfindung betrifft ein Verfahren zum berührungslosen Erfassen von Objekten in einem Überwachungsbereich nach dem Oberbegriff des Anspruchs 1.

Der Begriff "Objekt" ist im allgemeinsten Sinne zu verstehen. So kann es sich bei den "Objekten" um Gegenstände, aber auch um eine Umgebung handeln, welche überwacht werden soll.

Auch der Begriff "Licht" ist im allgemeinsten Sinne und nicht generell als Beschränkung auf das sichtbare Licht zu verstehen. Vielmehr soll unter dem Begriff "Licht" allgemein jede Art von elektromagnetischer Strahlung, nämlich jede Art von UV-Licht, IR-Licht sowie sichtbarem Licht verstanden werden, sofern es im erfindungsgemäßen Sinne zur Erfassung von Objekten brauchbar ist.

Verfahren zur Objekterfassung erfüllen zum einen eine Überwachungsfunktion. Hierbei wird die Umgebung überwacht. Wenn bestimmte Veränderungen wahrgenommen werden, wird ein entsprechendes Signal erzeugt, welches als Sicherheitssignal im Sinne des Unfallschutzes oder als Alarmierungssignal im Sinne der Überwachung verwendet werden kann. Zum anderen betrifft das Verfahren zur Objekterfassung die Material- oder Objekterkennung. Auch hier wird die Umgebung überwacht. Wird in dieser Umgebung ein zuvor definiertes oder eingelerntes Objekt erfasst, erzeugt das System ein Signal, welches in einer Steuerung verwendet werden kann.

Der Nachteil bei der konventionellen Sensorik besteht darin, dass der Sensor - sofern es sich um einen einzigen Sensor handelt - nicht in der Lage ist, die 3-dimensionale Umgebung zu erkennen. Die heute gebräuchlichen Kameras und Kamerasensoren liefern dem Empfänger nur ein 2-dimensionales Bild der Umgebung. Die Unterscheidung von Objekten ist dadurch beschränkt, da nicht sämtliche Merkmale des zu erfassenden Objektes genutzt werden können. Die Funktionalität von Maschinen durch eine teilweise unzuverlässige Objekterkennung ist damit verschlechtert.

Davon ausgehend liegt der Erfindung die **Aufgabe** zugrunde, ein verbessertes Verfahren zur berührungslosen Erfassung von Objekten in einem Überwachungsbereich mit einer besseren Unterscheidung der Objekte zu schaffen.

Die technische **Lösung** ist gekennzeichnet durch die Merkmale im Kennzeichen des Anspruchs 1.

Dadurch ist ein holographisches Sicherheitssystem zur berührungslosen Erfassung von Objekten in einem Überwachungsbereich geschaffen. Das optische System kann mittels holographischer Technologie mehrere Funktionen erfüllen. Zum einen kann das System eine Überwachungsfunktion erfüllen, mittels dem die Umgebung 3-dimensional überwacht wird. Wenn das System bestimmte Veränderungen wahrnimmt, wird ein entsprechendes Signal erzeugt, welches als Sicherheitssignal im Sinne des Unfallschutzes oder als Alarmsignal zur Überwachung verwendet werden kann. Zum anderen ist als weitere Funktion die Material- oder Objekterkennung zu nennen. Auch hier wird über das System die Umgebung 3-dimensional überwacht. Wird in der Umgebung ein zuvor definiertes oder eingelerntes Objekt erfasst, erzeugt das System ein Signal, welches in einer Steuerung verwendet wird.

Die Vorteile eines solchen Systems gegenüber der konventionellen Sensorik unter Verwendung von Kameras sowie Kamerasensoren liegt in der 2-dimensionalen Abbildung einer 3-dimensionalen Umgebung. Diese Abbildung lässt eine einfache Speicherung und eine schnelle Auswertung zu. Die Anwendung erlaubt eine bessere Unterscheidung von Objekten, da mehrere Merkmale, nämlich Oberflächenform, Oberflächengröße sowie Raumausrichtung genutzt werden können. Dadurch kann die Funktionalität von Maschinen durch zuverlässigere Objekterkennung verbessert und die Verfügbarkeit (durch weniger Fehlauslösungen von Sicherheitsfunktionen) erhöht werden.

Das Funktionsprinzip ist dabei wie folgt: Grundsätzlich handelt es sich bei der erfindungsgemäßen Objekterfassung um ein holographisches System, bestehend aus einer Senderlichtquelle, einem Empfänger und einem Signalauswerter. Die Senderlichtquelle sendet kohärentes Licht mit einer oder mehreren Wellenlängen (also einfarbiges oder mehrfarbiges Licht), vorzugsweise Laserlicht im sichtbaren roten oder infraroten Spektralbereich. Dieses Licht wird über geeignete Einrichtungen, beispielsweise Linsensysteme, in der gewünschten Form fokussiert. Das so fokussierte Licht beleuchtet die Umgebung für eine gleichmäßige Ausleuchtung der gewünschten Bereiche. Die auf diese Weise beleuchteten Objekte senden an jedem Punkt ihrer beleuchteten Oberfläche sogenannte Huygenssche Elementarwellen aus. Die gesamten Elementarwellen bilden die vom beleuchteten Objekt abgestrahlte Welle, deren Wellenfront die Informationen der Objektoberfläche durch Amplitude und Phase enthält. Die Auswertung erfolgt dann unter Verwendung eines Interferenzmusters dieser Wellenfront.

Die Weiterbildung gemäß Anspruch 2 betrifft Möglichkeiten, um eine gleichmäßige Ausleuchtung des Überwachungsbereiches zu erzielen. Dabei können unter Umständen weitere elektrooptische Einrichtungen wie Dreh-, Schwing- sowie Mikrospiegel, weiterhin Linsen oder Prismensysteme sowie schließlich Interferenzgitter vorgesehen sein.

Eine erste Variante zur Auswertung des reflektierten Lichts unter Verwendung eines Interferenzmusters schlägt Anspruch 3 vor. Die gesamte durch die Umgebung oder durch die Gegenstände zurückgestrahlte Welle wird durch eine entsprechend angeordnete Empfängeroptik empfangen und mit entsprechendem kohärentem Licht zur Interferenz gebracht. Das entstehende Interferenmuster kann dann auf einen zeilen- oder flächenlichtempfindlichen Sensor (vorzugsweise CMOS, aber auch CCD-Bauart) projiziert werden. Das so empfangene Interferenzmuster kann in einem Signalauswerter mit einem zuvor erzeugten und gespeicherten Interferenzmuster verglichen werden, um so das gewünschte Signal zur Objekterkennung, zur Überwachung oder zum Unfallschutz zu erzeugen.

Die Referenzwelle kann gemäß der Weiterbildung in Anspruch 4 aus einer Referenzlichtquelle, aber auch als Teilstrahl der Senderlichtquelle stammen.

Eine zweite Variante, mittels der das vom Objekt reflektierte Licht unter Verwendung eines Interferenzmusters ausgewertet wird, schlägt Anspruch 5 vor. Hierbei handelt es sich um ein holographisches Korrelationsverfahren. In diesem Fall wird ein Muster (beispielsweise eines Gut-Teils, Umgebung in Ordnung etc.) aufgenommen und davon ein Hologramm auf einer entsprechenden lichtempfindlichen Fläche eines fotoempfindlichen Materials erzeugt. Bei der Umgebungsüberwachung wird die Referenzwelle der ersten Variante ausgeschaltet und die empfangene Welle auf das zuvor beschriebene Musterhologramm projiziert. Hierbei entsteht eine Welle, welche der Referenzwelle nachgebildet ist. Diese kann auf einen lichtempfindlichen Empfänger fokussiert werden. Die Amplitude des gewonnenen Signals kann als Maß der Abweichung verwendet werden. Diese Variante ist insbesondere für schnelle Vergleichsvorgänge geeignet.

Zwei Ausführungsbeispiele des erfindungsgemäßen Verfahrens zur Objekterfassung werden nachfolgend anhand der Zeichnungen beschrieben. In diesen zeigt:
- Fig. 1: eine schematische Ansicht einer ersten Variante unter Verwendung einer Referenzwelle;
- Fig. 2: eine zweite Variante unter Verwendung eines Musterhologramms.

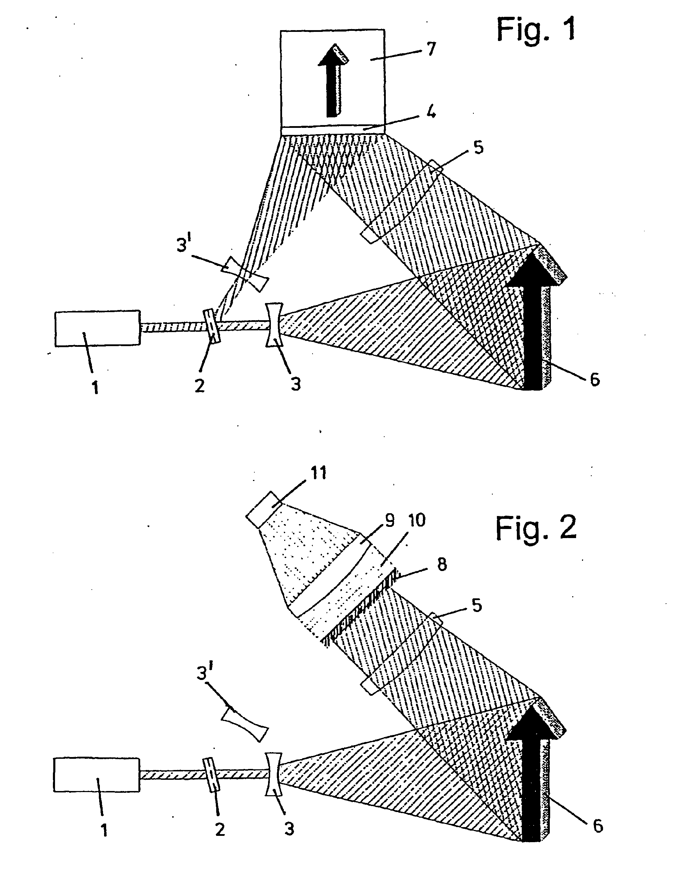

Die Objekterfassung der ersten Variante in Fig. 1 weist eine Lichtquelle 1 zur Erzeugung kohärenten Lichts auf. Der Lichtquelle 1 nachgeschaltet ist ein Strahlteiler 2 sowie zwei Kollimatoren 3, 3', und zwar zum einen der Kollimator 3 für den Sender und zum anderen der Kollimator 3' für einen Referenzstrahl. Das System weist weiterhin einen Empfänger 4 oder einen Detektor oder eine Bildfläche auf, welcher ein optisches System 5 vorgeschaltet ist.

### Die Funktionsweise ist wie folgt:

Die Lichtquelle 1 strahlt einfarbiges oder mehrfarbiges, kohärentes Licht aus. Dieses Licht trifft nach Passieren des Strahlteilers 2 sowie des Kollimators 3 auf ein Objekt 6. Die Oberfläche dieses Objektes 6 sendet sogenannte Huygenssche Elementarwellen aus, welche mittels des optischen Systems 5 auf den Empfänger 4 fokussiert werden. Von dem die Lichtquelle 1 verlassenden Lichtstrahl wird mittels des Strahlteilers 2 ein Teilstrahl abgezweigt und mittels des Kollimators 3' ebenfalls auf den Empfänger 4 projiziert. Es entsteht zusammen mit dem von dem Objekt 6 reflektierten Licht ein Interferenzmuster, welches in einer nachgeordneten Auswerteelektronik 7 ausgewertet, insbesondere mit einem abgespeicherten Solllnterferenzmuster verglichen wird.

Die zweite Ausführungsvariante in Fig. 2 weist wiederum eine Lichtquelle 1 sowie einen Kollimator 3 auf. Der Strahlteiler 2 sowie der Kollimator 3' sind nicht aktiv. Weiterhin weist das System ein vorher aufgezeichnetes Musterhologramm 8 im Sinne eines Soll-Interferenzmusters auf. Diesem Musterhologramm 8 ist wiederum ein optisches System 5 vorgeschaltet und ein weiteres optisches System 9 nachgeschaltet.

### Die Funktionsweise ist wie folgt:

Das von der Lichtquelle 1 ausgesandte kohärente Licht fällt auf das Objekt 6 und wird von diesem reflektiert. Das reflektierte Licht wird auf das Musterhologramm 8 projiziert. Hierbei entsteht durch Beugung eine Welle 10, welche der Referenzwelle des holographischen Systems der ersten Ausführungsvariante in Fig. 1 nachgebildet ist. Diese Welle 10 wird dann mittels des optischen Systems 9 auf den lichtempfindlichen Empfänger 11 fokussiert. Die Amplitude des gewonnenen Signals kann als Maß der Abweichung verwendet werden.

### Bezugszeichenliste

- 1: Lichtquelle
- 2: Strahlteiler
- 3: Kollimator
- 3': Kollimator
- 4: Empfänger
- 5: optisches System
- 6: Objekt
- 7: Auswerteelektronik
- 8: Musterhologramm
- 9: optisches System
- 10: Welle
- 11: Empfänger

## Patentansprüche

1. Verfahren zur berührungslosen Erfassung von Objekten (6) in einem Überwachungsbereich,
bei dem die Objekte (6) mit Licht beleuchtet werden,
**dadurch gekennzeichnet,**
**dass** als Licht kohärentes Licht verwendet wird und
**dass** das vom Objekt (6) reflektierte Licht unter Verwendung eines Interferenzmusters ausgewertet wird.

2. Verfahren nach dem vorhergehenden Anspruch,
**dadurch gekennzeichnet,**
**dass** das von einer Lichtquelle (1) ausgestrahlte kohärente Licht einem Strahlteiler (2) und/oder einem Kollimator (3, 3') und/oder einem anderen optischen System zugeführt wird.

3. Verfahren nach Anspruch 1 oder 2,
**dadurch gekennzeichnet,**
**dass** das vom Objekt (6) reflektierte Licht mit entsprechend kohärentem Licht in Interferenz gebracht wird und
**dass** das so erhaltene Ist-Interferenzmuster mit einem Soll-Interferenzmuster verglichen wird.

4. Verfahren nach Anspruch 3,
**dadurch gekennzeichnet,**
**dass** das entsprechend kohärente Licht entweder aus einer separaten Lichtquelle stammt oder ein abgezweigter Teilstrahl des kohärenten Lichts zum Bestrahlen des Objektes (6) ist.

5. Verfahren nach Anspruch 1 oder 2,
**dadurch gekennzeichnet,**
**dass** das vom Objekt (6) reflektierte Licht einem Soll-Interferenzmuster überlagert wird und
**dass** das daraus resultierende, gebeugte Licht hinsichtlich seiner Intensität gemessen wird.
